# EUROPEAN PATENT APPLICATION

(11) **EP 4 740 731 A2**
(43) Date of publication of application: **13.05.2026**
(21) Application number: 26159094.7
(22) Date of filing: 23.11.2022
(51) Int. Cl.: A01K 61/60

(54) **FISH FARM WITH WORKING PLATFORM**

(30) Priority: 23.11.2021 NO 20211427
(62) Divisional of application: 22821985.3
(71) Applicant: Westcon Yards As, N-5582 ØLENSVÅG (NO)
(72) Inventor: MATRE, Arne, N-5580 Ølen (NO)
(74) Representative: Acapo Onsagers AS

(57) **Abstract**

The present invention relates to a modular offshore fish farm comprising one or more closed net cages and a service unit, each closed net cage being supported by a buoyant body which is configured for floating in a body of water, wherein each closed net cage is configured for moving vertically in a body of water relative to the buoyant body, each buoyant body comprising a number of buoyant elements, where each buoyant body comprises connecting means for connecting to an adjacent buoyant body, the buoyant bodies providing a working platform between the closed net cages, where each closed net cage comprises a suppressing device.

## Description

### TECHNICAL FIELD

The present invention relates generally to an offshore fish farm, and more particularly to a modular offshore fish farm comprising a number of closed net cages and corresponding buoyant bodies.

### BACKGROUND

Aquaculture is a fast-growing global industry. The conventional fisheries are declining dramatically and the seafood needed in the future will, to a greater extent, have to be produced by aquaculture.

However, in recent years, more challenges have arisen for this industry to be faced with. For the farming of salmonoids, this relates to, among other things, the treatment of fish infected with crustaceous parasites like salmon louse, the escape of fish from floating farming cages, diseases due to viruses, bacteria and parasites, so-called "genetic contamination" of wild populations of salmonoids, and emissions of waste products from the cages into recipients. These challenges especially relate to the farming of fish in conventional floating cages allowing flow-through of water. Such open cages are constituted by a net which forms a closed enclosure for fish in particular, and which is kept afloat by means of a surrounding buoyancy system.

Closed farming cages are known within the art. These are formed of a tight cloth material which forms a closed enclosure for aquatic organisms such as fish. To ensure that the water exchange rate is sufficient for maintaining a minimum oxygen level in the water within the cage, it is common to pump in so much water that the water surface inside the cage is higher than the water surface outside the cage. Thereby the pressure within the cage is larger than the ambient pressure and water will flow out of the cage through formed openings. This will subject the buoyancy system of a closed cage to larger forces than the buoyancy system of an open cage of the same size. In addition to keeping the actual cloth or net of the cage afloat, the buoyancy of the buoyancy system must be dimensioned for holding the amount of water within the cage that is above the water surface of the surrounding water. This water constitutes a considerable mass. In addition, this water has a moment of inertia which causes the wave influence on the buoyancy system to be greater than in an open cage where the wave motion passes substantially unobstructedly through the buoyancy system and into the cage.

Other have proposed another rigid semisubmersible fish farm for unshielded sea areas, which contains two buoys that are connected by vertical and diagonal brackets. Cages of the fish farm are fully submerged in the sea to avoid large wave loads near the water surface, and an underwater air bag is designed to provide air. It should be noted that this concept uses the conventional gravity cage, which relies on bottom ballasts to maintain the volume. Such cages encounter bigger deformation in the high-speed water flow in an unshielded area than in a shielded area. This could threaten the health of fish. In addition, there are also challenges with the use of the underwater air bag.

A boat-like fish farm has also been proposed, where the boat-like fish farm has a single point mooring system working as a weather vane. The fish farm may rotate around a head structure in various environmental directions. Such a system can increase the spread of waste of fish resources and reduce the likelihood of infection. However, the proposed concept faces the following challenges. As the weather vane system allows the system to orient toward water flow and wave directions in most environmental conditions, in this boat-like fish farm downstream cages are subjected to less water exchange than upstream cages for the reason that multiple cages are arranged in a row adjacent to each other, i.e. at small distances in boat-like fish farms. Therefore, levels of dissolved oxygen of the downstream cages will be lower, than in upstream cages, and the amount of waste increases, which may seriously affect the health of fish. In order to improve water exchange, dynamic positioning systems have been proposed to orient the fishery at an angle in relation to water flows, but this significantly increases energy consumption as well as operational and maintenance costs.

Thus, new configurations of marine fish farms, especially of fish farms in deep seas and high seas, are constantly emerging at present. However, each new fish farm system typically comes with its own problems and/or challenges, such as low sea use, high construction and maintenance costs, and being unfriendly to the environment, to mention a few.

NO 338238 B1 relates to a buoyancy element for constructing a modular buoyancy system for a circularly shaped net cage, the buoyancy element including a cage side, an opposite straight long side, coupling sides between the cage side and the straight long side, and the cage side being curved, following the periphery of the net cage.

WO 97/38573 A1 relates to an aquaculture system for growing aquatic animals such as fish and crustaceans, where a rigid walled floating tank is positioned in a body of water, a volume of water being provided to the tank via a floating pump assembly that is positioned in the body of water external to the tank. An inlet of the pump assembly is movable and may be positioned in a desired location and depth of the body of water, such that clean water that is free of surface contaminants, and that is at a selected temperature, is provided to the tank. The introduction of new water to the tank displaces and discharges a volume of water from the tank, thereby renewing the oxygen source in the tank and removing solid waste products such as ammonia. Additional oxygen may be injected into the water at different locations via oxygen diffuser.

NO 344466 B1 relates to a floating fish farming plant including a cage supported by a buoyant body which is configured for floating in a body of water. The farming plant further includes a lifting portion arranged between the buoyant body and the cage and configured for moving the cage between a position at the level of, or below, the buoyant body and a position in which at least a portion of the cage is above the buoyant body. The cage includes at least a lower section, forming a bottom portion of the cage, said lower section having a wall comprising an elastic material and/or being elastically connected to the middle section; whereby transfer of dynamic forces between the lower section and the adjoining section is reduced. An assembly comprises a plurality of fish farming plants.

There is thus a need for alternatives to today's fish fishing farms, or at least supplementary solutions for fish farms.

### SUMMARY OF THE INVENTION

An object of the present invention is to remedy or reduce at least one of the drawbacks of the prior art or at least provide a useful alternative to the prior art.

An object of the present invention is to provide a modular offshore fish farm which from the constructional point of view is simple and robust, and which may be used without the danger of collapse under various climatic conditions, including particularly exposed oceanic regions having heavy wave undulations.

Another object is to provide a modular offshore fish farm which is easier to handle at sea.

Another object is to provide a modular offshore fish farm which can protect the fish from undesirable environmental incidents, such as lice infestation, algal blooms or the like.

Yet another object is to provide a modular offshore fish farm that can be adapted to each location.

These objects are achieved according to the present invention with a modular offshore fish farm comprising a number of net cages and corresponding buoyant bodies as defined in the independent claim 1. Further embodiments of the invention are defined in the dependent claims.

The present invention relates to a modular offshore fish farm, where the modular offshore fish farm comprises a number of closed net cages, each closed net cage being supported by a buoyant body which is configured for floating in a body of water, each closed net cage being configured for moving vertically in a body of water relative to the buoyant body by changing the buoyancy of the closed net cage, each closed net cage comprises a center column arranged vertically within the closed net cage, each closed net cage comprises a suppressing device, wherein the suppressing device is arranged moveably along the vertically arranged center column.

In one aspect, each buoyant body comprises a number of buoyant elements.

In one aspect, each buoyant body comprises connecting means for connecting to an adjacent buoyant body.

In one aspect, the buoyant bodies provide a working platform between the closed net cages.

According to one aspect, the suppressing device comprises a number of ribs extending between an inner center ring and an outer ring, a net extending between two adjacent ribs, wherein the net is configured to fish passing through a plurality of meshes of the net, wherein the net is configured to be moveable radially inwards to provide an opening, wherein the inner center ring is configured to move along the vertically arranged center column.

In one aspect, when moving the suppressing device along the vertically arranged center column, fish may be sorted according to size with smaller fish being allowed to pass through the net.

In one aspect, the mesh size of the net is chosen according to a fish size to be separated from the largest fish.

The modular offshore fish farm may, in one embodiment, comprise a service barge, a service unit, or the like, where the service barge or service unit may be connected to one or more of the buoyant elements of the buoyant body in order to perform and/or support different which is/are to be done at the modular fish farm. According to one aspect, the service barge may then be equipped, for instance, with a building, such as a living quarter, different equipment, such as pump(s), silo(s) for fish food, maintenance equipment, cleaning equipment, oxygenation system(s) or the like.

Each closed net cage of the modular offshore fish farm may, for instance, be made from a metal, a composite material, or a combination of these.

According to one embodiment, the buoyant elements may be connected to each other through welding, bolts or the like. Furthermore, each buoyant element may, on one side facing an adjacent buoyant element, be provided with a tongue and an opposite side of the buoyant element may be provided with a groove. The adjacent buoyant element facing the side of the buoyant element provided with the tongue, may then on this side be provided with a groove having a corresponding form to the tongue, while an opposite side of the buoyant element may be provided with a groove which is to be connected with a tongue of a following buoyant element.

According to one aspect, at least one of the number of buoyant elements of one buoyant body may comprise a ballasting and deballasting system, where such a system may be used to position the buoyant body in a desired position in the body of water. Furthermore, at least one of the number of buoyant elements of one buoyant body may comprise a pipe or conduit arrangement for one or more inlets and one or more outlets for water, pump(s), filter(s) and the like.

The number of buoyant elements of the buoyant body may, according to one embodiment, be made from concrete or a metal. However, it should be envisaged that the buoyant elements could be made from other materials, such as composite materials or could be made from a combination of materials. Furthermore, it could be envisaged that the buoyant elements could be made from different materials. According to one aspect, the closed net cages could be made to comprises a conical bottom surface in order to create a zone in a bottom region of the closed net cage where solid waste, i.e. fodder and faeces could be collected. The conical bottom surface of each closed net cage could furthermore be connected to a pumping system through a hose, pipe or the like in order to transport the solid waste from the closed net cage and to a cleaning system. Such a cleaning system may, for instance, be arranged on the service barge.

The modular fish farm may, according to one embodiment, also comprise a chute, duct, channel, or the like, where the chute, duct or channel may be used to transport the fish from a closed net cage and to a vessel or the like. The chute, duct, channel, or the like may then in appropriate ways be connected to one buoyant element of the buoyant body and arranged to slope downward. The closed net cage may, according to this arrangement, be arranged with a closable opening. When the fish are gathered in the closed net cage, the closable opening can be opened, and the fish will be guided from the closed net cage and into the vessel or another closed net cage through the chute, duct, channel or the like.

According to one embodiment, each buoyant body may comprise a ballasting and deballasting system in order to be able to position the buoyant body and/or the closed net cage correctly in a body of water.

The modular offshore fish farm may also comprise a pumping system to supply oxygen-rich seawater to each closed net cage.

In one aspect, the suppressing device assumes a downwardly facing position when in the uppermost position near the upper edge of the closed net cage, and the suppressing device assumes a upwardly facing position when in the lowest position in the closed net cage.

### DETAILED DESCRIPTION

Other advantages and features of the invention will become apparent from the following detailed description, the accompanying drawings, and the appended claims, wherein:
Figure 1 shows a perspective view of a first exemplary embodiment of a modular offshore fish farm according to the present invention, where a number of buoyant bodies are connected to form the fish farm,
Figure 2 shows the modular offshore fish farm according to figure 1, where a number of closed net cages are arranged in the buoyant bodies,
Figure 3 shows a closed net cage in an operational position,
Figure 4 shows the net cage according to figure 3 in a position where fish are to be emptied from one closed net cage and to a vessel connected to the modular offshore fish farm,
Figure 5 shows the closed net cage according to figure 3 in a transport and maintenance position,
Figure 6A-6B show an alternative exemplary embodiment of the modular offshore fish farm according to figure 1, where figure 6A shows the offshore fish farm in a perspective view and figure 6B shows the offshore fish farm from above,
Figure 7A-7B show a suppressing device for fish according to the present invention, where figure 7A shows the suppressing device arranged in an upper position of the closed net cage, and where figure 7B shows how the suppressing device in this upper position is used to empty the fish from the closed net cage and to a vessel moored to the closed net cage, through a channel, chute or the like,
Figure 8A-8B show the suppressing device arranged in different positions within the fish tank of the modular offshore fish farm,
Figures 9A-9B show the suppressing device in greater detail, where figure 9A shows the suppressing device in an uppermost position and figure 9B shows the suppressing device in a lowest position,
Figures 10A-10B show inlets and outlets for water into and out of the fish tank, where figure 10A shows how the inlets and outlets are arranged in a buoyant element of a buoyant body, and figure 10B shows the arrangement of the pipes etc. inside the buoyant element,
Figures 11A-11B show a locking system for the fish tank relative the buoyant body, where figure 11A shows rails arranged around an outer periphery of the fish tank, and figure 11B shows the locking groove arrange on an inside of a buoyant element of the buoyant body,
Figure 12 shows further details of the arrangement connected to the inlets and outlets of the modular offshore fish farm, and
Figures 13A-13B show the locking arrangement in greater detail.

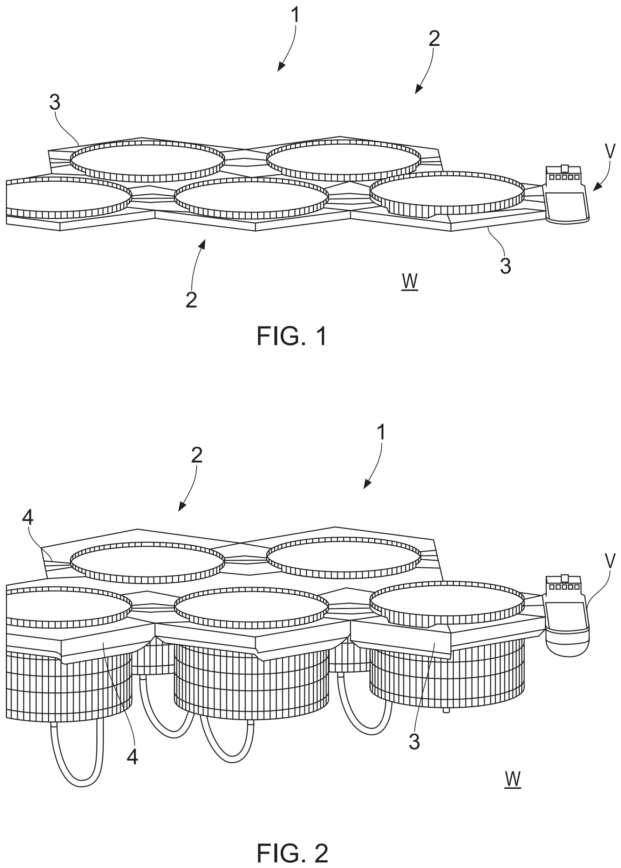

Figure 1 shows an exemplary embodiment of a modular offshore fish farm 1 according to the present invention, where the modular offshore fish farm 1 comprises five closed net cages 2, each closed net cage 2 being supported by a buoyant body 3 configured for floating in a body of water W.

Each closed net cage 2 comprises a guiding and locking system, where the guiding and locking system allows each closed net cage 2 to be moved relative the buoyant body 3, for instance between an operational position and a transport/maintenance position as well as one or more intermediate positions, and thereafter to be locked in the desired position. One intermediate position may be a position where the fish are to be emptied from the closed net cage 2 and to a vessel connected to the modular offshore fish farm 1, where the vessel V is used to transport the fish to a slaughter plant onshore or the like.

According to the present invention, each closed net cage 2 may be moved up and down in the body of water W relative to the buoyant body 3 by changing the buoyancy of the closed net cage 2, i.e. by changing an amount of water being inside the closed net cage 2. If the closed net cage 2 is to be lowered relative to the buoyant body 3, then an amount of water pumped into the closed net cage 2 will be greater than an amount of water pumped or drained out of the closed net cage 2. Similarly, if the closed net cage 2 is to be lifted relative to the buoyant body 3, then an amount of water pumped or drained out of the closed net cage 2 will be greater than an amount of water pumped into the closed net cage 2.

The vessel may also be used to "store" the fish during maintenance of the closed net cage 2.

If a closed net cage 2 of the modular offshore fish farm 1 is to be maintained, the guiding and locking system will be used to bring the closed net cage 2 to the position where the fish can be emptied from the closed net cage 2, and when the fish, from this position, are transferred to the vessel for temporary "storage" of the fish, the guiding and locking system is used to move the closed net cage 2 further to the maintenance position. When the maintenance of the closed net cage 2 has been carried out, the closed net cage 2 will be lowered again and the fish may be transferred back to the closed net cage 2 again from the vessel, either in the position that allows the emptying of the fish or also in the operational position of the closed net cage 2.

Although figure 1 shows a modular offshore fish farm 1, it should be understood that the modular offshore fish farm 1 according to the present invention could comprise fewer or more closed net cages 2 than the five closed net cages 2 according to the exemplary embodiment , for instance, one, two, three, four or six or more closed net cages 2.

Each closed net cage 2 comprises a buoyant body 3 arranged around an outer circumference of the closed net cage 2, where the buoyant body 3 in this exemplary embodiment comprise six buoyant elements 4. When the buoyant element 4 are connected to each other in appropriate ways, the buoyant elements 4 will form a buoyant body 3 with a hexagonal form. However, it should be understood that the buoyant body 3 could comprise a different number of buoyancy elements 4, for instance eight buoyancy elements 4, whereby such a number of buoyancy elements 4 would give a buoyant body 3 with an octagonal form.

Furthermore, each buoyant element 4 of the buoyant body 3 of one closed net cage 2 is, on a side facing away from the closed net cage 2, provided with connecting means, such that the buoyant body 3 of one closed net cage 2, could be connected to a buoyant element 4 of an adjacent buoyant body 3 of a closed net cage 2, in order to form the modular offshore fish farm 1.

According to one embodiment, the buoyant elements 4 may be connected to each other through welding, bolts or the like, in order to be assembled to a buoyant body 3.

Furthermore, each buoyant element 4 may, on one side of the buoyant element 4, be provided with a "tongue", while an opposite side of the buoyant element 4 is provided with a groove. When the buoyant elements 4 are to be connected to each other, the buoyant elements 4 will be arranged in such a way that a side of a first buoyant element 4 provided with the "tongue" will be arranged adjacent a side of a second buoyant element 4 provided with a groove, such that the "tongue" of the first buoyant element 4 can be connected to the groove of the second buoyant element 4. An opposite side of the second buoyant element 4 is provided with a "tongue", where the "tongue" of the second buoyant element 4 is to be connected to a side of a third buoyant element 4 provided with a groove. A last buoyant element 4 (i.e. the sixth buoyant element) of the buoyant body 3 is then, on a side facing the first buoyant element 4, provided with a "tongue", such that the "tongue" of the sixth buoyant element 4 may be connected to the side of the first buoyant element 4 provided with the groove.

When the number of buoyant bodies 3 are connected to each other in order to form the modular offshore fish farm 1, the length and width of the different buoyant elements 4 of the buoyant bodies 3 will provide a working platform between the number of closed net cages 2.

The closed net cages 2 of the modular offshore fish farm 1 according to the present invention may be made from metal, a composite material or combination of these.

The buoyant elements 4 of the buoyant bodies 3 may be made from concrete or a metal. However, it should be envisaged that the buoyant elements 4 could be made from other materials, such as composite materials or could be made from a combination of materials.

Furthermore, it is to be understood that the buoyant elements 4 could be made from different materials.

Figure 2 shows the modular offshore fish farm 1 according to figure 1, where a closed net cage 2 is arranged in each buoyant body 3.

The buoyant elements 4 of each buoyant body 3 are connected together to form the buoyant body 3, whereafter two adjacent buoyant bodies 3 are connected to each other through the connecting means provided on the respective buoyant elements 4 of the buoyant bodies 3.

Furthermore, at least one of the buoyant elements 4 of the buoyant body 3 is, on a side facing the closed net cage 2 provided with a recess for the guiding and locking system such that the closed net cage 2 could be moved and locked substantially vertically relative to the buoyant body 3.

Each closed net cage 2 comprises an annular shaped upper portion with vertical walls and a conical bottom portion in order to create a zone in a lower part of the closed net cage 2 where solid waste, i.e. fodder and faeces could be collected. The conical bottom portion of each closed net cage 2 could furthermore be connected to a pumping system through a hose, pipe or the like in order to transport the solid waste from the closed net cage 2 and to a cleaning system. Such a cleaning system may, for instance, be arranged on a service unit S, service barge or the like.

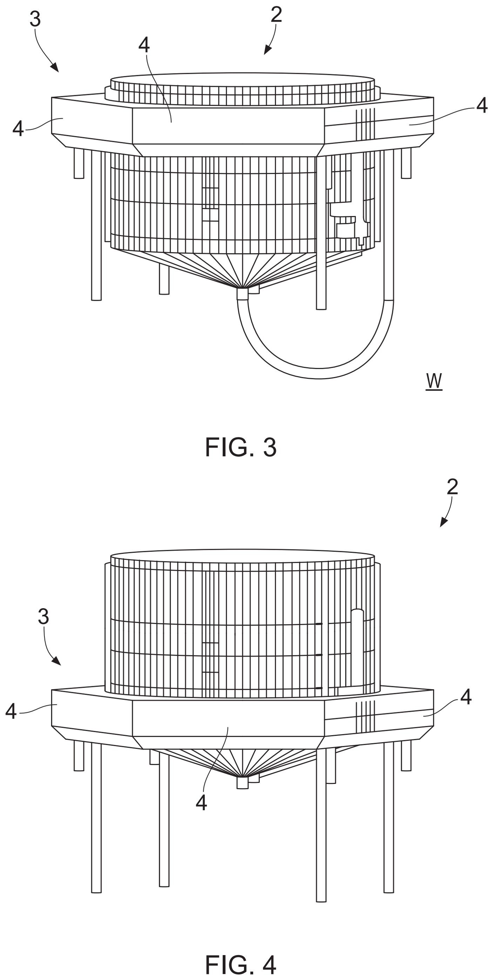

Figure 3 shows how a closed net cage 2 of the modular offshore fish farm 1 is arranged in an operational position, where the closed net cage 2 is lowered down into the body of water W, such that only an upper part of the closed net cage 2 is laying above the body of water W.

Figure 4 shows how the guiding and locking system is used to lift the respective closed net cage 2 to an intermediate position arranged between the operational position and a transport or maintenance position, where the arrangement of the closed net cage 2 in this position will allow fish in the closed net cage 2 to be emptied from the closed net cage 2 to a vessel V connected to the modular offshore fish farm 1, or to another closed net cage 2 of the modular offshore fish farm 1.

When the fish are to be emptied from one closed net cage 2 of the modular offshore fish farm 1, a chute 7, duct, channel or the like is used to guide and transfer the fish from the closed net cage 2 to the vessel V, or to another closed net cage 2 of the modular offshore fish farm 1.

The chute 7, duct, channel, or the like is then in appropriate ways connected to the closed net cage 2 and arranged to slope downward.

The closed net cage 2 will then be provided with a closable opening (not shown). When the fish are gathered and/or suppressed in the closed net cage 2, the closable opening can be opened, and the fish will be guided from the closed net cage 2 and into the vessel V, or into an adjacent closed net cage 2, through the chute 7, duct, channel, or the like, due to gravity.

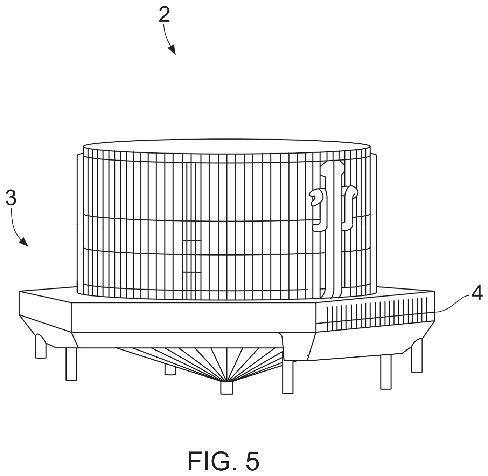

Figure 5 shows how a closed net cage 2 of the modular offshore fish farm 1 is arranged when each individual closed net cage 2 is to be transported between two sites, for instance from a building site and to a site where the modular offshore fish farm 1 is to be located, or when a closed net cage 2 is to be maintained during the operation of the modular offshore fish farm 1 or when the fish are to be emptied from a closed net cage 2.

If the closed net cage 2 has to be maintained, the guiding and locking system is used to bring the closed net cage 2 to the position where the fish firstly must be emptied from the closed net cage 2. During this operation, the closed net cage 2 is locked to the buoyant body 3. When the fish have been transferred to the vessel for temporary "storage" of the fish, the guiding and locking system is used to move the closed net cage 2 further up to the maintenance position. When the maintenance of the closed net cage 2 has been carried out, the closed net cage 2 will be lowered again and the fish may be transferred back to the closed net cage 2 again from the vessel, either in the position that allows the emptying of the fish or also in the operational position of the closed net cage 2.

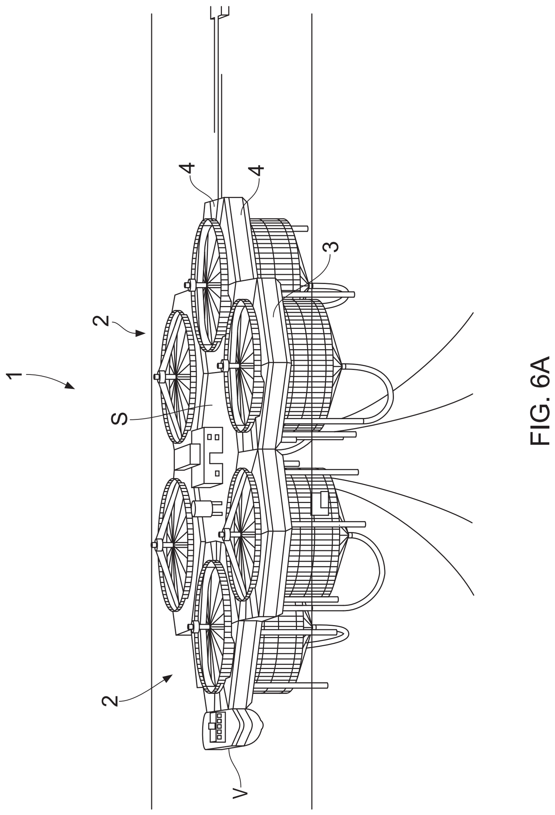

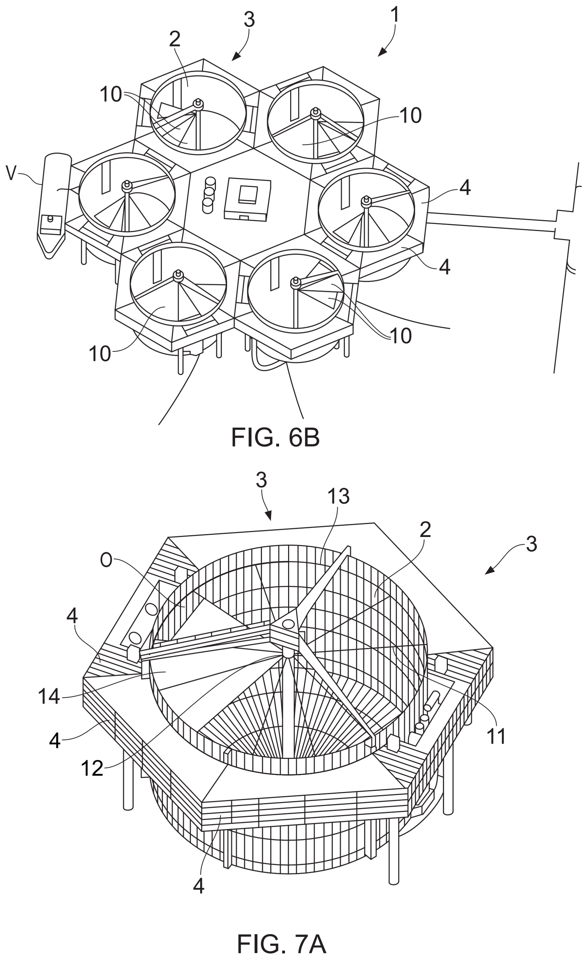

Figures 6A-6B show an alternative embodiment of the modular offshore fish farm 1 according to figure 1, where the modular offshore fish farm 1 also in this embodiment comprise six closed net cages 2, each closed net cage 2 being supported by a buoyant body 3 configured for floating in a body of water W.

Each closed net cage 2 and buoyant body 3 comprise a guiding and locking system for allowing each closed net cage 2 to be moved relative the buoyant body 3, for instance between an operational position and a transport/maintenance position as well as one or more intermediate positions. One intermediate position may be a position where the fish are to be emptied from the closed net cage 2 and to a vessel connected to the modular offshore fish farm 1, where the vessel V is used to transport the fish to a slaughter plant onshore or the like.

The six closed net cages 2 are arranged around a service unit S, whereby the service unit S is used to serve all the closed net cages 2 in the modular offshore fish farm 1. The service unit S shown in this exemplary embodiment comprises a living quarter for personnel or crew, silos or bunkers for fish feed, oxygenation systems, pumps, and aggregators etc.

The vessel V may also be used to "store" the fish during maintenance of the closed net cage 2.

If a closed net cage 2 is to be maintained, the guiding and locking system will be used to bring the closed net cage 2 to the position where the fish can be emptied from the closed net cage 2, and when the fish have been transferred to the vessel for temporary "storage" of the fish, the guiding and locking system is used to move the closed net cage 2 further to the maintenance position. When the maintenance of the closed net cage 2 has been carried out, the closed net cage 2 will be lowered again and the fish may be transferred back to the closed net cage 2 again from the vessel, either in the position that allows the emptying of the fish or also in the operational position of the closed net cage 2.

It should be understood that the modular offshore fish farm 1 according to the present invention could comprise fewer or more closed net cages 2 than the six closed net cages 2 according to the exemplary embodiment, for instance, one, two, three, four or seven or more closed net cages 2, where the number of closed net cages 2 is to be adapted to the specific location, number of fish, type of fish (smolt or large fish etc.).

Each closed net cage 2 comprises a buoyant body 3 arranged around an outer circumference of the closed net cage 2, where the buoyant body 3 in this exemplary embodiment comprise six buoyant elements 4. When the buoyant element 4 are connected to each other in appropriate ways, the buoyant elements 4 will form a buoyant body 3 with a hexagonal form.

However, it could be envisaged that the buoyant body 3 could comprise a different number of buoyancy elements 4, for instance eight buoyancy elements 4, whereby such a number of buoyancy elements 4 would give a buoyant body 3 with an octagonal form.

Furthermore, each buoyant element 4 of the buoyant body 3 of one closed net cage 2 is, on a side facing away from the closed net cage 2, provided with connecting means, such that the buoyant body 3 of one closed net cage 2, could be connected to a buoyant element 4 of an adjacent buoyant body 3 of a closed net cage 2, in order to form the modular offshore fish farm 1.

When the number of buoyant bodies 3 are connected to each other, the length and width of the different buoyant elements 4 of the buoyant bodies 3 will provide a "working space" between the number of closed net cages 2, where this "working space" may be used to drive vehicles, transport different equipment on etc.

The closed net cages 2 of the modular offshore fish farm 1 according to the present invention may be made from metal, a composite material or combination of these.

The buoyant elements 4 of the buoyant bodies 3 may be made from concrete or a metal. However, it should be envisaged that the buoyant elements 4 could be made from other materials, such as composite materials or could be made from a combination of materials.

Furthermore, it is to be understood that the buoyant elements 4 could be made from different materials.

Figure 7A shows a suppressing device 10 arranged within a closed net cage 2, where the suppressing device 10 is used to suppress the fish inside the closed net cage 2, for instance when the fish are to be displaced in order to be transferred to a fish carrier in order to be transported to a slaughter plant onshore.

The suppressing device 10 comprises a number of ribs 11 extending between an inner center ring 12 and an outer ring 13, where a net 14 extends between two adjacent ribs 11. The suppressing device 10 will therefore comprise a number of "cake slices". The inner center ring 12 is connected to a vertically arranged center column in the closed net cage 2, such that the suppressing device 10 can be guided along the center column.

Each of the ribs 11 is provided with a rope (not shown), wire or the like, where two adjacent ribs 11 forms a regulation system for the net (14) extending between these two adjacent ribs 11, such that the net 14 can be adjusted between a closed position (extending to the outer ring 13) and an open position (being arranged between the inner center ring 12 and the outer ring 13), thereby providing an opening between the two adjacent ribs 11.

If the fish are to be collected to be transported to the slaughter plant, one or more of the nets 14 are adjusted to provide an opening O between two adjacent ribs 11 (i.e. a "cake slice", where the fish may "escape" through this opening when the suppressing device 10 is moved downwards along the center column in the closed net cage 2.

It should be understood that canvas could be used instead of net 14.

When the suppressing device 10 is arranged in the uppermost position, near an upper edge of the closed net cage 2, the suppressing device 10 will have a downwardly facing opening. When the suppressing device 10 is to be moved downwardly along the center column towards the bottom of the closed net cage 2, firstly one or more nets 14 are adjusted to provide openings O in a number of "cake slices", such that fish can move through the opening, from an underside of the suppression device 10 and to an upper side of the suppression device 10.

During the movement of the suppressing device, from the uppermost position to the lowest position in the closed net cage 2, the suppressing device 10 will undergo a change in the form, as the suppressing device 10 will be moved from a downwardly open position to an upwardly open position.

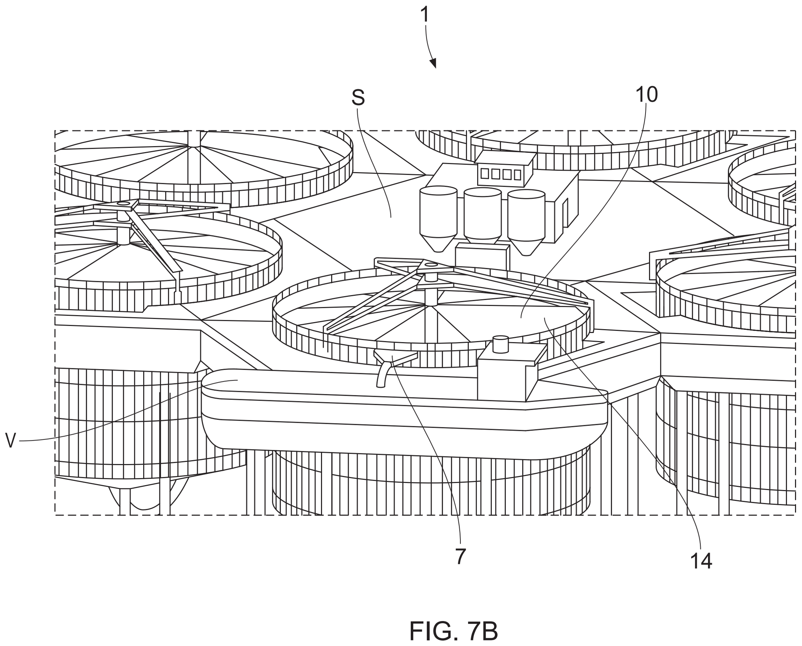

Figure 7B shows the suppressing device 10 in the uppermost position, where the fish, through the movement of the suppressing device 10 from the bottom of the closed net cage 2 to the uppermost position have moved through the one or more openings O provided in one or more of "cake slices", whereafter the nets 14 of the respective "cake slices" are moved towards the outer ring 13 in order to form a closed suppressing device 10. Furthermore, in this uppermost position, the suppressing device 10 will have a downwardly facing opening (i.e. the inner center ring 12 will be arranged above the outer ring 13).

When the fish being in the volume delimited by the vertical walls of the closed net cage 2 and the suppressing device 10 are to be transferred to the vessel V moored to the closed net cage 2, one opening or hatch (not shown) provided in the vertical wall of the closed net cage 2 is opened. The fish will then, due to the form of the suppressing device 10 and the gravity, be transferred to the vessel V more gently, without pumps or the like, through the chute 7, duct, channel or the like.

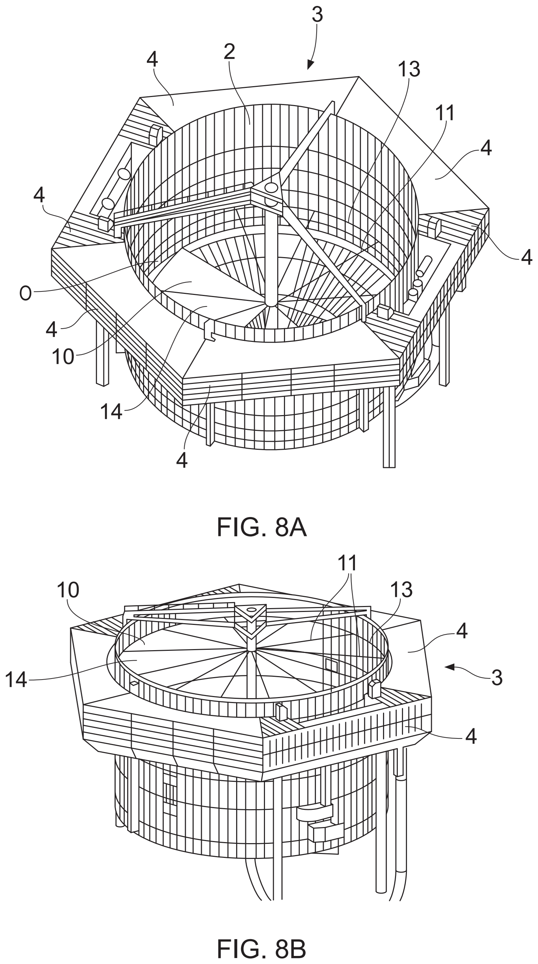

Figure 8A shows the suppressing device 10 in a lowermost position (i.e. near the bottom of the closed net cage 2), where one or more of the "cake slices" has been opened (i.e. the net 14 has been moved towards the inner center ring 13, thereby providing an opening O between the inner circumference of the closed net cage 2 and the edge of the net 14 of this "cake slice", such that fish may be "sucked" and/or swim through this opening O in order to be located above the suppressing device 10. When the suppressing device 10 is in its lowermost position, the nets 14 in the "cake slices" that are provided with the opening O will be moved towards the outer ring 13 in order to close the "cake slices". In this lowermost position, the suppressing device 10 will have an upwardly facing opening (i.e. the inner center ring 12 will be arranged below the outer ring 13).

When the openings O are closed, the suppressing device 10 is again moved towards its uppermost position. During this movement of the suppressing device 10, the suppressing device 10 will shift its form, from an upwardly facing opening, to a downwardly facing opening, as shown in figure 8B. When the suppressing device 10 is located in its uppermost position, the transfer of fish may be finished or carried out as described in accordance with figure 7B.

Each of the inner center ring 12 and the outer ring 13 of the suppressing device 10 is connected to a winch system, where each winch system comprises a number of wires (not shown) arranged in such a way to allow the suppressing device 10 to be moved and/or adjusted up and down in the closed net cage 2.

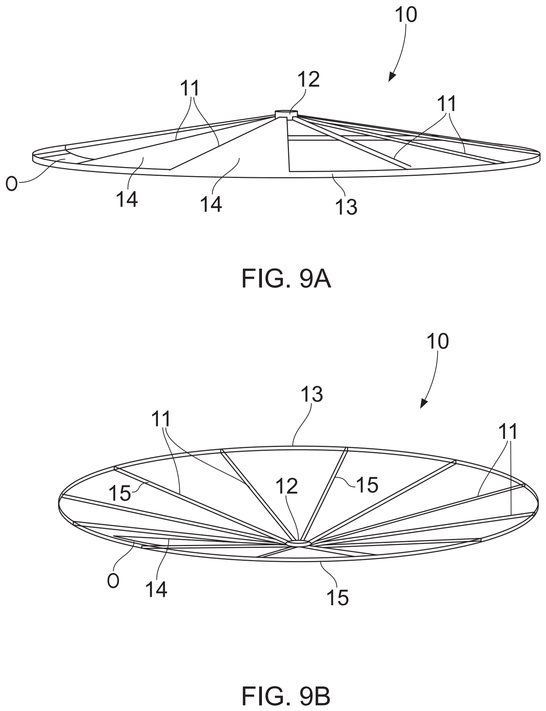

Furthermore, the winch system allow an independent positioning of the inner center ring 12 and the outer ring 13, such that, for instance, the inner center ring 12 may be positioned above or below the outer ring 13, depending on whether the suppressing device 10 is to have a downwardly open position (as shown in figure 9A) or an upwardly open position (as shown in figure 9B).

During the movement of the suppressing device, from the uppermost position to the lowest position in the closed net cage 2, the suppressing device 10 will undergo a change in the form, as the suppressing device 10 will be moved from a downwardly open position to an upwardly open position, by controlling the winch system of the inner center ring 12 and the outer ring 13 separately or independently of each other. When running the winch systems at the same speed, the inner center ring 12 and outer ring 13 will not move relative to each other.

For the sake of simplicity, the figures shown only one or two "cake slices" of the suppressing device 10, but it should be understood that the suppressing device 10 comprises a number of "cake slices" that will cover the entire cross sectional area of the closed net cage 2.

Figures 9A-9B show the suppressing device 10 in greater detail, where it can be seen that the suppressing device 10 comprises a number of ribs 11 extending between the inner center ring 12 and the outer ring 13. A net 14 is arranged between two adjacent ribs 11, where the net 14 through ropes (not shown), wires or the like may be moved between the inner center ring 12 and the outer ring 13 in order to provide the opening O in this "cake slice". The size of the opening O may be adjusted by moving the net 14 either closer to the inner center ring 12 or closer to the outer ring 13.

Furthermore, the outer periphery of the outer ring 13 may be provided with cleaning means 15, where the cleaning means 15 are used to clean the inner periphery of the closed net cage 2 when the suppressing device 10 is moved up and down in the closed net cage 2.

The cleaning means 15 may comprise scrapes, brushes or the like in order to remove sprout, algae etc. from the walls of the closed net cage 2.

Similarly, an inner periphery of the inner center ring 12 may be provided with cleaning means 15, where the cleaning means 15 are used to clean the outer periphery of the center column when the suppressing device 10 is moved up and down in the closed net cage 2.

In one embodiment the suppressing device 10 may also be arranged to rotate about the center column, in order to be able to clean the bottom of the closed net cage 2. The suppressing device 10 may then, for instance through a gear system **or the like**, be arranged to rotate, for instance, 10 to 30 degrees to each side of the center column, from a specified starting point. The ribs 11 may then be provided with cleanings means 15 for cleaning the bottom surface of the closed net cage 2. When the suppressing device 10 is rotated, the whole bottom surface may be cleaned by the cleaning means 15 on the ribs 11.

Figure 9A shows the suppressing device 10 with a downwardly facing opening (i.e. when the suppressing device 10 is arranged in the uppermost position in the closed net cage 2), while figure 9B shows the suppressing device 10 with an upwardly facing opening (i.e. when the suppressing device 10 is arranged in the lowermost position in the closed net cage 2).

However, sometimes for various reasons, it is not desirable to empty the entire closed net cage 2 for fish, whereby the suppressing device 10 in such an embodiment may be arranged in such a way that the suppressing device 10 may provide an "air pocket" in the suppressing device 10 when the suppressing device 10 is arranged in an downwardly open position (as shown in figure 9A). Each net 14 extending between two adjacent ribs 11 and forming a "cake slice" in the suppressing device 10, may then be provided as to be at least partly air impermeable over its length. Each of the nets may, for instance, be air impermeable from the inner center ring 12 and half of its length (i.e. half the length of a distance between the inner center ring 12 and the outer ring 13.

The center column may then be provided with a plurality of openings and/or nozzles for air along a longitudinal length of the center column, where the openings and/or nozzles through pipes, hoses or the like are connected to an oxygenation system arranged, for instance, on the service unit S.

The oxygenation system may then be used to pump down oxygen below the inner center ring 12 of the suppressing device 10, whereby this oxygen will rise when fed into the water inside the closed net cage 3. As the nets 14 of "cake slices" of the suppressing device 10 are provided to be air impermeable in an area close to the inner center ring and the center column arranged within the closed net cage 2, and the suppressing device 10 has a downwardly open position, the oxygen will be entrapped in the upper part of the suppressing device 10, whereby fish located below the suppressing device may fill their swim bladder with oxygen from the "air pocket" provided and entrapped within the suppressing device 10.

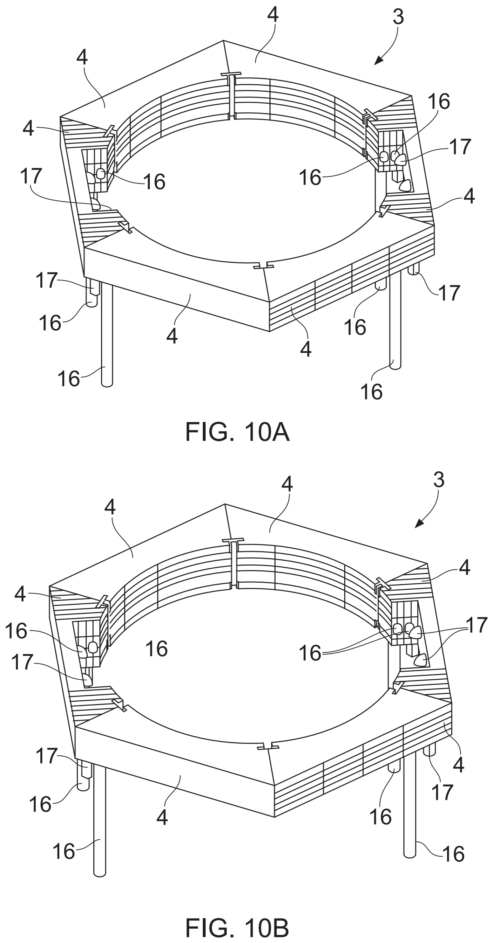

Figures 10A-10B show an exemplary embodiment of buoyant body 3 according to the present invention, where the buoyant body 3 comprises four buoyant elements 4 connected to each other in appropriate ways, for instance welding and/or bolts (not shown) in order to provide the buoyant body 3. Two of the buoyant elements 4 are ballastable/deballastable, while the remaining two buoyant elements 4 comprises arrangement of pipes for supply of fresh sea water to the closed net cage 2 and arrangement of pipes for drainage of sea water from the closed net cage 2.

In this embodiment each of the two buoyant elements 4 comprise two pipes 16 for supply of fresh sea water and two pipes 17 for drainage of sea water from the closed net cage 2.

An outlet for fresh sea water of each pipe 16 is then connected to an end of a flexible hose (not shown), where an opposite end of the flexible hose is connected to an inlet for fresh sea water provided in the closed net cage 2. Similarly, an inlet for sea water from the closed net cage 2 of each pipe 17 is connected to an end of a flexible hose (not shown), where an opposite end of the flexible hose is connected to an outlet for sea water from the closed net cage 2 provided in the closed net cage 2. Through this arrangement of the pipes 16, 17, the flexible hoses and the inlets for fresh sea water and outlet for sea water from the closed net cage 2, it is obtained that the closed net cage 2 can be moved relative the buoyant body 3.

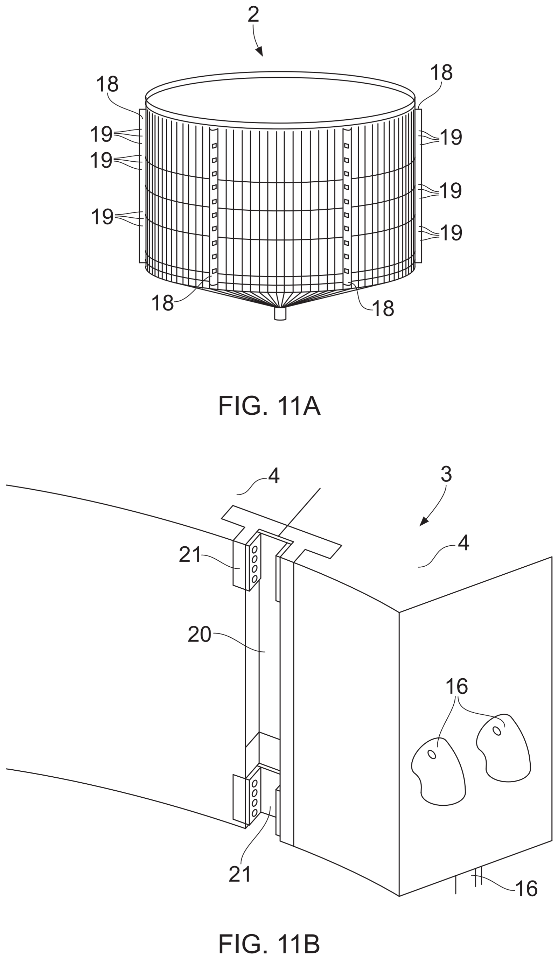

Figures 11A-11B show a guiding and locking system for the closed net cage 2 and the buoyant body 3 arranged around the closed net cage 2, where figure 11A shows that the closed net cage 2 is provided with a number of spaced apart beams 18, rails or the like around it outer circumference, where each beam 18, rail or the like is provided with a number of throughgoing holes 19 along its length. In this exemplary embodiment each beam 18, rail or the like is provided with a number of groups of throughgoing holes 19, where each group of holes 19 comprises four throughgoing holes 19.

Figure 11B shows how the buoyant elements 4 of the buoyant body, on an inside is provided with a vertically extending groove 20 or slit, where a locking unit 21 is arranged in the vertically extending groove 20 or slit near both an upper end and a lower end of the buoyant element 4. The locking unit 21 is in appropriate ways fixed to the groove 20 or slit.

When the buoyant body 3 is arranged around the closed net cage 2, each of the beams 18, rails or the like of the of the closed net cage 2, is accommodated in the corresponding groove 20 or slit of the buoyant body 3.

The locking unit 21 comprises in this embodiments four bolts (not shown), where the bolts are adapted to the throughgoing holes 19 provided in the beams 18, rails or the like of the closed net cage 2, such that the bolts may be extended into the throughgoing holes 19 when the closed net cage 2 is to be locked to the buoyant body 3 in a specific position, for instance in an operation position as shown in figure 3 or in a maintenance or transport position as shown in figure 5.

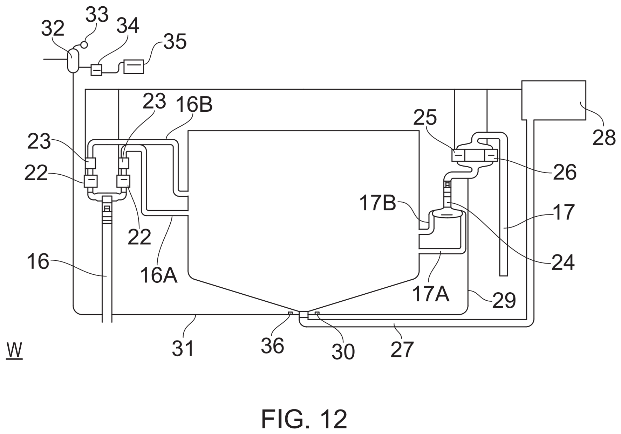

Figure 12 shows in greater detail a pumping and cleaning system connected to the pipes 16 for supply of fresh water and pipes 17 for drainage of sea water from the closed net cage 2, where the pumping and cleaning system is arranged in a buoyant element 4 of the buoyant body 3.

The pipe 16 for supply of fresh water may be extendable, in order to pump up fresh sea water with a certain temperature, a certain salinity and/or to pump up sea water free for sea lice. The pipe 16 may be connected to one or more pumps 22 and one or more filters 23.

**In** this exemplary embodiment the pipe 16 for supply of fresh water is branched off in two pipes 16A, 16B, where each of the two pipes 16A, 16B is connected to the pumping and filtering system. **In** this embodiment the pumping and cleaning system comprises at least one pump 22 and at least one filter 23.

Furthermore, an outlet of each of the two pipes 16A, 16B is connected to a flexible hose (not shown), where an opposite end of the flexible hose is connected to an inlet for fresh sea water provided in the closed net cage 2.

The pipe 17 for drainage of sea water from the closed net cage 2 is in a similar branched off in two pipes 17A, 17B, where each of the two pipes 17A, 17B is connected to another pumping and filtering system, where the pumping and cleaning system comprises at least one pump 24 and at least one filter 25, 26.

An inlet for sea water from the closed net cage 2 of each pipe 17A, 17B is connected to an end of a flexible hose (not shown), where an opposite end of the flexible hose is connected to an outlet for sea water from the closed net cage 2 provided in the closed net cage 2.

Through this arrangement of the pipes 16A, 16B and 17A, 17B, the flexible hoses and the inlets for fresh sea water and outlet for sea water from the closed net cage 2 it is obtained that the closed net cage 2 can be moved relative the buoyant body 3.

The bottom of the closed net cage 2 may be connected to a pipe 27, where the pipe extends from the closed net cage 2 and to a settling tank 28 arranged on the modular offshore fish farm 1, for instance on the service unit S. Through this arrangement the solid waste collected on the bottom of the closed net cage 2 may be removed from the closed net cage 2 and collected in the settling tank 28 in order to be processed further.

The closed net cage 2 may also be connected to an additional pipe 29, where this pipe 29 may be used if the closed net cage 2 for some reason needs to be emptied, for instance when the closed net cage 2 is to be maintained, transported from one site to another, the fish are to undergo a treatment or the like. A valve 30 connected to the additional pipe 29 may be opened and the sea water from the closed net cage 2 will then be led to the pumping and filtering system for drainage of sea water in order to be cleaned before the cleaned sea water is returned to sea through the pipe 17.

Similarly, the closed net cage 2 may also be connected to yet an additional pipe 31, where the pipe 29 may be used when dead fish from the closed net cage 2, the dead fish being accumulated at the bottom of the closed net cage 2, is to be removed from the closed net cage 2. The additional pipe 31 is connected to at least one vacuum tank 32, where the at least one vacuum tank 32 is connected to a control and driving unit 33 and to a milling and/or grinding device 34 which in turn is connected to an ensiling device 35. A valve 36 connected to the additional pipe 31 may be opened if needed and the at least one vacuum tank 32 will "suck" out the dead fish from the closed net cage 2, whereafter the dead fish etc. is transported to the milling and/or grinding device 34. When the dead fish have been treated in the mill and/or grinding device 34, the residual waste will be sent to the ensiling device 35.

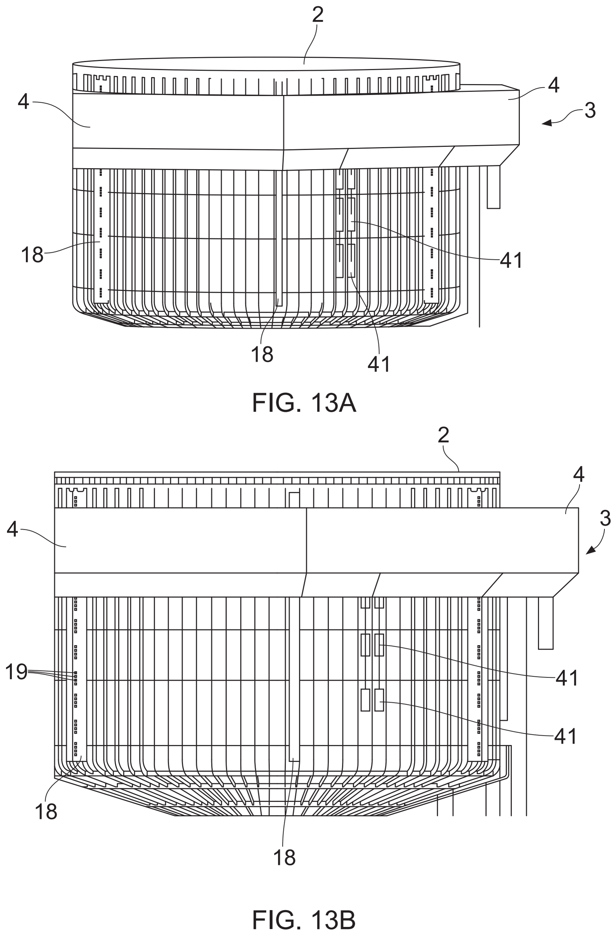

Figures 13A-13B show how the closed net cage 2 may be provided with a plurality of closeable hatches 41, doors or the like around it periphery, where these closeable hatches 41, doors or the like may be opened manually, without use of electric power. Figure 13A shows the hatches 41, doors or the like in an open state, while figure 13B shows the hatches 41, doors or the like in a closed state.

In one embodiment the closed net cage 2 may be provided with a plurality of adjustable nozzles (not shown) around its inner periphery and along the height of the walls, where the adjustable and/or rotable nozzles are used to provide a water current within the closed net cage 2, creating either a water current in a direction the fish within the closed net cage 2 are used to follow, or even a counter-current for a period of time, for instance when new fish are introduced in the closed net cage 2.

The invention has now been explained with several non-limiting examples. One skilled in the art will appreciate that a variety of variations and modifications may be made to the modular offshore fish farm as described within the scope of the invention as defined in the appended claims.

### CLAUSES

1. A modular offshore fish farm (1) comprising
   - one or more net cages (2) and
   - a service unit (S),
   wherein each net cage (2) is supported by a buoyant body (3) which is configured for floating in a body of water (W),
   **characterized in that**
   - each buoyant body (3) comprises connecting means for connecting to an adjacent buoyant body (3),
   - the net cages (2) are closed net cages;
   - each closed net cage (2) is configured for moving vertically in a body of water (W) relative to the buoyant body (3) by changing the buoyancy of the closed net cage (2),
   - each closed net cage (2) comprises a center column arranged vertically within the closed net cage (2);
   - each closed net cage (2) comprises a suppressing device (10) for suppressing fish inside the net cage (2);
   wherein the suppressing device (10) is arranged moveably along the vertically arranged center column.
2. The modular offshore fish farm (1) according to clause 1, characterized in that the suppressing device (10) comprises
   - a number of ribs (11) extending between an inner center ring (12) and an outer ring (13),
   - a net (14) extending between two adjacent ribs (11),

   wherein the net (14) is configured to be moveable radially inwards to provide an opening (O),
   wherein the inner center ring (12) is configured to move along the vertically arranged center column.
3. The modular offshore fish farm (1) according to clause 2, characterized in that each of the ribs (11) is provided with at least one rope, wire or the like, where two adjacent ribs (11) forms an adjustment system for the net (14), to move the net (14) between the inner center ring (12) and the outer ring (13).
4. The modular offshore fish farm (1) according to clause 2 or 3, characterized in that the net (14) is water and air impermeable over at least a part of its longitudinal length.
5. The modular offshore fish farm (1) according to one or more of the clauses 2-4, characterized in that an outer periphery of the outer ring (13) is provided with cleaning means (15).
6. The modular offshore fish farm (1) according to one or more of the clauses 2-4, characterized in that an inner periphery of the inner center ring (12) and/or an underside of the ribs (11) is/are provided with cleaning means (15).
7. The modular offshore fish farm (1) according to clauses 5 or 6, characterized in that the cleaning means (15) comprises scrapers, brushes or the like.
8. The modular offshore fish farm (1) according to one or more of the preceding clauses, characterized in that the suppressing device (10) is arranged to be rotated about the center column provided in the closed net cage (2), through a rotating system.
9. The modular offshore fish farm (1) according to one or more of the preceding clauses, characterized in that the center column is provided with a plurality of adjustable openings and/or air nozzles provided along a longitudinal length of the center column, the plurality of adjustable openings and/or air nozzles being connected to an oxygenation system through one or more pipes, hoses or the like.
10. The modular offshore fish farm (1) according to one or more of the preceding clauses, characterized in that a winch system is connected to each of the inner center ring (12) and the outer center ring (13).
11. The modular offshore fish farm (1) according to one or more of the preceding clauses, characterized in that the service unit (S) comprises a building, different equipment, or the like.
12. The modular offshore fish farm (1) according to one or more of the preceding clauses, characterized in that each closed net cage (2) is made from a metal or a composite material.
13. The modular offshore fish farm (1) according to one or more of the preceding clauses, characterized in that each of the buoyant elements (4) is made from concrete or a metal.
14. The modular offshore fish farm (1) according to clause 1, characterized in that the modular offshore fish farm (1) comprises at least one chute (7), duct or channel for transporting fish,
   wherein the closed net cage (2) is arranged with a closeable opening adapted, when the closeable opening is in the opened position, to guide fish from the closed net cage (2) via the chute (7) to a vessel (V) or another closed net cage (2).
15. The modular offshore fish farm (1) according to clause 1, characterized in that each closed net cage (2) and buoyant body (3) comprises a guiding and locking system,
   wherein the guiding and locking system allows each closed net cage (2) to be moved relative the buoyant body (3) and thereafter to be locked in the desired position.
16. The modular offshore fish farm (1) according to any one of the previous clauses, characterized in that
   the suppressing device (10) assumes a downwardly facing position when in the uppermost position near the upper edge of the closed net cage (2), and the suppressing device (10) assumes a upwardly facing position when in the lowest position in the closed net cage (2).

## Claims

1. A net cage (2) for a modular offshore fish farm (1),
- wherein the net cage (2) is supported by a buoyant body (3) which is configured for floating in a body of water (W),
- the net cage (2) is a closed net cage,
- wherein the closed net cage (2) is configured for moving vertically in a body of water (W) relative to the buoyant body (3) by changing the buoyancy of the closed net cage (2) by changing the amount of water being inside the closed net cage (2), **characterized in that**
- each closed net cage (2) comprises a suppressing device (10) for suppressing fish inside the net cage (2).

2. The closed net cage (2) for a modular offshore fish farm (1) according to claim 1, wherein the closed net cage (2) comprises a center column arranged vertically within the closed net cage (2),
wherein the suppressing device (10) is arranged moveably along the vertically arranged center column.

3. The closed net cage (2) for a modular offshore fish farm (1) according to claims 1 or 2, wherein the suppressing device (10) is moved from the lowermost position near the bottom of closed net cage (2) to its uppermost position, where a transfer of fish from the closed net cage (2) to a vessel (V), or to another closed net cage (2) is carried out.

4. The closed net cage (2) for a modular offshore fish farm (1) according to anyone of the previous claims, wherein the buoyant body (3) comprises a ballasting and deballasting system in order to be able to position the buoyant body (3) and/or the closed net cage (2) correctly in a body of water.

5. The closed net cage (2) for a modular offshore fish farm (1) according to anyone of the previous claims,
wherein the closed net cage (2) comprises a pumping and cleaning system connected to a pipe (16) for supplying fresh water and a pipe (17) for drainage of sea water from the closed net cage (2),
wherein the pumping and cleaning system is arranged in the buoyant body (3), wherein the pipe (16) is connected to one or more pumps (22) and one or more filters (23),
wherein the pipe (17) is connected to at least one pump (24) and at least one filter (25, 26).

6. The closed net cage (2) for a modular offshore fish farm (1) according to anyone of the previous claims, wherein the suppressing device (10) comprises
- a number of ribs (11) extending between an inner center ring (12) and an outer ring (13),
- a net (14) extending between two adjacent ribs (11),
wherein the net (14) is configured to fish passing through a plurality of meshes of the net (14),
wherein the net (14) is configured to be moveable radially inwards to provide an opening (O),
wherein the inner center ring (12) is configured to move along the vertically arranged center column.

7. The closed net cage (2) for a modular offshore fish farm (1) according to claim 6, wherein each of the ribs (11) is provided with at least one rope or wire, where two adjacent ribs (11) forms an adjustment system for the net (14), to move the net (14) between the inner center ring (12) and the outer ring (13).

8. The closed net cage (2) for a modular offshore fish farm (1) according to claim 6 or 7, wherein a winch system is connected to each of the inner center ring (12) and the outer center ring (13).

9. The closed net cage (2) for a modular offshore fish farm (1) according to anyone of claims 6 to 8, wherein the net (14) is water and air impermeable over at least a part of its longitudinal length.

10. The closed net cage (2) for a modular offshore fish farm (1) according to anyone of claims 2 to 9, wherein the suppressing device (10) is arranged to be rotated about the center column provided in the closed net cage (2), through a rotating system.

11. The closed net cage (2) for a modular offshore fish farm (1) according to anyone of claims 2 to 10, wherein the center column is provided with a plurality of adjustable openings and/or air nozzles provided along a longitudinal length of the center column, the plurality of adjustable openings and/or air nozzles being connected to an oxygenation system through one or more pipes or hoses.

12. The closed net cage (2) for a modular offshore fish farm (1) according to any one of the previous claims, wherein the closed net cage (2) comprises at least one chute (7), duct or channel for transporting fish,
wherein the closed net cage (2) is arranged with a closeable opening adapted, when the closeable opening is in the opened position, to guide fish from the closed net cage (2) via the chute (7) to a vessel (V) or another closed net cage (2).

13. The closed net cage (2) for a modular offshore fish farm (1) according to anyone of the previous claims, wherein the closed net cage (2) and buoyant body (3) comprises a guiding and locking system, wherein the guiding and locking system allows the closed net cage (2) to be moved relative the buoyant body (3) and thereafter to be locked in the desired position.

14. A modular offshore fish farm (1), wherein the modular offshore fish farm (1) comprises:
- two or more closed net cages (2) according to anyone of claims 1 to 13;
wherein each buoyant body (3) comprises connecting means for connecting to an adjacent buoyant body (3).

15. The modular offshore fish farm (1) according to claim 14,
wherein the modular offshore fish farm comprises a service unit (S).
